Europäisches Patentamt

European Patent Office

Office européen des brevets

(11) Veröffentlichungsnummer: **0 163 173 B1**

(12) **EUROPÄISCHE PATENTSCHRIFT**

(45) Veröffentlichungstag der Patentschrift: 04.09.91

(51) Int. Cl.⁵: **C03B 5/18,** C03B 5/02, C03B 5/225, C03B 5/26

(21) Anmeldenummer: 85105553.3

(22) Anmeldetag: 07.05.85

(54) **Verfahren und Vorrichtung zum chargenweisen Herstellen von Glas.**

(30) Priorität: 17.05.84 DE 3418284

(43) Veröffentlichungstag der Anmeldung:
04.12.85 Patentblatt 85/49

(45) Bekanntmachung des Hinweises auf die
Patenterteilung:
04.09.91 Patentblatt 91/36

(84) Benannte Vertragsstaaten:
FR GB IT

(56) Entgegenhaltungen:
FR-A- 2 112 345          FR-A- 2 201 261
FR-A- 2 213 239          GB-A- 2 047 678
US-A- 2 007 755          US-A- 2 008 495
US-A- 2 250 155          US-A- 3 951 635

(73) Patentinhaber: Schott Glaswerke
Hattenbergstrasse 10
W-6500 Mainz(DE)

(84) Benannte Vertragsstaaten:
FR IT

Patentinhaber: CARL-ZEISS-STIFTUNG
Schott Glaswerke Hattenbergstrasse 10
W-6500 Mainz 1(DE)

(84) Benannte Vertragsstaaten:
GB

(72) Erfinder: Günthner, Franz
Tucholskyweg 46
W-6500 Mainz(DE)

(74) Vertreter: Dr. Fuchs, Dr. Luderschmidt
Dipl.-Phys. Seids, Dr. Mehler Patentanwälte
Abraham-Lincoln-Strasse 7
W-6200 Wiesbaden(DE)

## Beschreibung

Die Erfindung betrifft ein Verfahren und einen Behälter zum chargenweisen Herstellen von Glas durch Schmelzen, Läutern und Entleeren.

Bei Glasherstellungsverfahren kommt es im wesentlichen darauf an, daß große Mengen geschmolzenen, blasenfreien Glases kontinuierlich den Verarbeitungsmaschinen zugeführt werden.

Es ist bekannt, das Schmelzen, Läutern und Entleeren in sogenannten kontinuierlichen Wannen durchzuführen, so daß das Schmelzen, Läutern und Verarbeiten gleichzeitig erfolgen kann. Das Schmelzsystem ist von der Gemengeeinlage bis zum Speiseraustritt ununterbrochen durch ein festes Kanalsystem verbunden. Im Bereich der Wanne selbst, d.h. bei den Schmelz-, Läuter- und Abkühlelementen können einzelne Teile nur ausgewechselt oder größere Reparaturen ausgeführt werden, wenn der Betrieb unterbrochen wird.

In der Wanne gehen die Einzelvorgänge ineinander über, das Verweilzeitspektrum der Schmelze ist sehr groß und die Strömungsverhältnisse sind nicht eindeutig beherrschbar. Deshalb sind große Baueinheiten mit großen Sicherheitsvolumina erforderlich. Aus diesen Gründen ist der Durchsatz von geschmolzenem Glas pro Volumeneinheit (m$^3$) des Schmelzbehälters gering. Das Kontrollieren der Einzelvorgänge und das Lokalisieren von Störungen ist schwierig. Die Wärmeverluste sind erheblich und können nur schwer weiter verringert werden.

Es sind auch Schmelzverfahren bekannt, die in Pt-Tiegeln im Labor durchgeführt werden. Dabei wird die Wärme von außen über die ganze Oberfläche der Schmelze und des Tiegels an die Schmelze herangeführt Die wärmeübertragende Oberfläche/Schmelzvolumeneinheit ist groß, der Austrittsweg der Blasen klein. Die Schmelzleistung/Schmelzvolumeneinheit ist deshalb sehr groß. Eine große Schmelzleistung hat erhebliche wirtschaftliche Vorteile. Diese werden aber nur bei der Schmelze großer Mengen bedeutsam. Die Übertragung des Laborverfahrens auf Anlagen mit großem Durchsatz unter Beibehaltung der großen Schmelzleistung/Schmelzvolumeneinheit ist aber nicht möglich, weil bei großen Anlagen nur noch die Oberfläche der Schmelze, nicht mehr die des Tiegels, für die Wärmeübertragung an die Schmelze genutzt werden kann und u.a. die wärmeübertragende Oberfläche/Schmelzvolumeneinheit kleiner und der Austrittsweg für die Blasen größer und damit die Läuterzeit länger wird.

Ferner werden Verfahren mit direkter elektrischer Widerstandsheizung angewendet. Jedoch sind auch hier beim kontinuierlichen Betrieb große Sicherheitsvolumina erforderlich, um das Verschleppen von ungeschmolzenem und ungeläutertem Glas zu vermeiden. Der Wärmetransport zum auf der Schmelze liegenden Gemenge erfolgt durch Konvektion und Strahlung von darunter vorbeiströmendem geschmolzenen Glas. Die Strömung hat ein großes Geschwindigkeitsspektrum, wobei jedoch der Teilstrom mit der größten Geschwindigkeit so langsam fließen muß, daß er unzureichend geschmolzenes Glas nicht mitreißt. Die Nachteile des kontinuierlichen Betriebes sind:

- das große Verweilzeitspektrum der einzelnen Teilchen und die dadurch verschiedenen Bedingungen für Reaktionen, Stoff- und Wärmeaustauschvorgänge,
- die größere Störanfälligkeit, da beim Ausfall eines Elements die gesamte Anlage stilliegt,
- die starre Kapazität,
- die schwierige, wenn nicht unmögliche Umstellung auf andere Produktions- oder Verfahrensweisen.

Zur Verkürzung des Schmelz- oder Läutervorgangs und damit zur Erhöhung des Durchsatzes werden Verfahren angewendet, bei denen zumindest das Läutern in einem rotierenden Behälter durchgeführt wird.

Es ist aus der DE-OS 22 14 157 bekannt, das schon geschmolzene aber noch ungeläuterte Glas kontinuierlich in einen rotierenden Behälter einzugeben. Je nach Drehzahl wird in einem Bruchteil der sonst erforderlichen Zeit das Glas geläutert. Anschließend wird bei rotierendem Behälter die fertige Schmelze abgezogen.

Der Nachteil dieses Verfahrens liegt darin, daß es keine Möglichkeit gibt, das Glas bei rotierendem Behälter in ein stehendes Gefäß zu überführen, ohne daß dabei Blasen entstehen. Der austretende Strahl hat eine große Rotationsenergie, aber keine Festigkeit. Er kann über große Strecken nicht frei fallen, ohne auszubrechen. Wird er unmittelbar nach dem Austritt abgefangen, treten große Scherkräfte auf, so daß Blasen eingedreht werden. Schmelzen und Läutern im gleichen Behälter ist nicht möglich.

Aus der DE-OS 22 59 219 ist ein Hochtemperaturofen bekannt, der mit einer Plasma- oder Lichtbogenheizung ausgestattet ist und kontinuierlich oder diskontinuierlich betrieben werden kann. Der Schmelzvorgang wird unter Rotation des Schmelzofens durchgeführt, wodurch die Schmelze einen flüssigen Wandüberzug in der Form eines Rotationsparaboloids an der Innenoberfläche des Ofens bildet.

Das so geschmolzene Glas ist weitgehend blasenfrei, so daß sich ein anschließender Läutervorgang erübrigt.

Dieses Verfahren hat den Nachteil, daß nur geringe Mengen Glas geschmolzen werden können, weil die Energie lediglich über die freie Oberfläche der Schmelze zugeführt wird und somit nicht für größere Chargen ausreicht.

Ferner ist aus der US-PS 20 06 947 ein öl- oder gasbeheizter Ofen bekannt, bei dem das Schmelzen und Läutern kontinuierlich oder diskontinuierlich in einer ebenfalls dünnen Gemenge- bzw. Glasschicht, die sich auf der paraboloidförmigen Innenseite eines rotierenten trichterförmigen Behälters befindet, erfolgt und in dem die Glasentnahme ebenfalls kontinuierlich oder diskontinuierlich ausgeführt wird.

Dieses Verfahren hat folgende Nachteile:

Bei der Gas- oder Ölheizung ist die für große Leistungen erforderliche Energiedichte in der Schmelze nicht zu erreichen, weil die Energie nur über die freie Oberfläche der Schmelze zugeführt werden kann. Die große freie Oberfläche fördert die Verdampfung, die wiederum Schlieren zur Folge hat. Bei dei beschriebenen Anordnung kann nur bei rotierendem Behälter das Gemenge eingegeben und geschmolzen werden, da es bei stehendem Behälter in einem begrenzten, die Innenoberfläche bedeckenden Streifen so schnell nach unten fließen würde, daß die verfügbare Zeit weder zum Schmelzen noch zum Läutern ausreichen würde. Die Entnahmeöffnung ist immer offen. Der Glasinhalt des Behälters kann nur über die Drehzahländerung innerhalb kleiner Grenzen verändert werden. Es ist kein Blasen oder Rühren möglich. Bei der Entnahme aus dem rotierendem Behälter entstehen die oben beschriebenen Probleme.

Ziel der vorliegenden Erfindung ist daher ein Herstellungsverfahren für Glas, das den Durchsatz großer Mengen unter Vermeidung der Nachteile des kontinuierlichen Schmelzens und Läuterns ermöglicht und das ein kontinuierliches Weiterverarbeiten des Glases erlaubt. Ein weiteres Ziel der Erfindung ist ein zur Durchführung dieses Verfahrens geeigneter Behälter.

Dieses Ziel wird erfindungsgemäß dadurch erreicht, daß das Schmelzen, Läutern und Entleeren in einem oder mehreren identischen Behälter(n) durchgeführt wird, die elektrisch beheizt werden, daß zumindest das Läutern unter Rotation dieses Behälters durchgeführt wird, daß das Entleeren des geläuterten Glases bei ruhendem Behälter erfolgt, und daß die Zuführung des Glases zu den Weiterverarbeitungsstationen kontinuierlich erfolgt.

Bei diesem Verfahren werden vorzugsweise mehrere Behälter gleichzeitig benutzt, wobei das Schmelzen und Läutern entweder in einem einzigen oder in getrennten Behältern durchgeführt wird.

Da der Schmelzvorgang im allgemeinen länger dauert als der Läutervorgang, wird bei der Benutzung getrennter Behälter das Läutern in mindestens zwei Behältern durchgeführt, wobei jeder Läuterbehälter von zwei Schmelzbehältern gespeist wird. Die Verbindung zwischen Schmelz- und Läuterbehälter kann durch fest angeordnete oder bewegliche Rinnen erfolgen. Zur Verkürzung des Läutervorgangs wird das Läutern unter Rotation des Behälters durchgeführt. Damit bei der Entleerung nicht wieder Blasen in die Schmelze eingedreht werden, wie es bei der Entleerung rotierender Behälter auftritt, wird hierzu der Behälter angehalten. Als zusätzliche Maßnahme wird die Ausströmungsgeschwindigkeit des Glases durch Anlegen eines Über- oder Unterdruckes gesteuert. Die Entleerung erfolgt in eine Rinne, die an ein Verteilersystem angeschlossen ist. Diese Rinne kann beweglich angeordnet sein, so daß bei der Verwendung fest angeordneter Behälter diese Rinne zur Entleerung der Behälter nacheinander unter diese Behälter geschwenkt wird. Eine andere Ausführungsform besteht aus einer fest angeordneten Rinne und beweglichen Behältern, die zur Entleerung über die Rinne bewegt werden. Nach der Entleerung wird der Behälter entweder mechanisch mittels eines Schiebers oder durch Einfrieren der Schmelze mittels geeigneter Kühlröhre in der Austrittsöffnung verschlossen.

Beim Wechseln der Behälter oder beim Umschwenken der Rinne würde der Glasfluß für kurze Zeit unterbrochen und der Glasstand im Verteilersystem abfallen. Da die Verarbeitungsmaschinen kontinuierlich weiterlaufen, muß der Glasstand auf einem konstanten Niveau gehalten werden, was dadurch erreicht wird, daß vor der Unterbrechung des Glasflusses in einem über dem Verteilersystem angeordneten Ausgleichsbehälter die während der Unterbrechung benötigte Glasmenge gesammelt und dann bei der Unterbrechung des Glasflusses abgegeben wird.

Außerdem befindet sich in diesem Verteilersystem mindestens eine Kühlvorrichtung, um die Schmelze auf die Verarbeitungstemperatur abzukühlen.

Ein Behälter gemäß der Erfindung ist in Anspruch 17 beschrieben Die Behälter sind erfindungsgemäß so ausgebildet, daß sie Elektroden am Boden des Behälters aufweisen, die so angeordnet sind, daß die eingesetzte Energie optimal genutzt und eine größere Energiedichte als bisher erreicht wird. Diese Behälter können zur Entleerung über die Rinne bewegt werden, sind um eine vertikale Achse rotierbar und können um eine horizontale Achse geneigt werden, so daß, falls das Läutern in einem getrennten Behälter erfolgt, dieser im rotierenden Zustand gefüllt werden kann. Die geneigte Anordnung und das Drehen des Behälters verhindern das Durchfallen und Auslaufen des Glases beim Füllen und Läutern. Zum Verschließen der Austrittsöffnung weist der Behälter entweder einen Schieber oder Kühlrohre auf, mittels derer die Schmelze eingefroren werden kann.

Die Erfindung wird nachfolgend anhand mehrerer beispielhafter Ausführungen näher erläutert, die in den Zeichnungen dargestellt sind.

Es zeigen:

| Fig. 1 a-c | Anordnung von beweglichen Behältern mit fest an geordneter Rinne |
| Fig. 2 | Anordnung unbeweglicher Behälter mit Schwenkrinne |
| Fig. 3 | Anordnung von fest angeordneten Schmelz- und Läuterbehältern mit beweglichen Rinnen |
| Fig. 4 | vertikaler Schnitt durch Behälter und Rinnen bei geneigter Anordnung |
| Fig. 5 a,b | Anordnung unbeweglicher Behälter mit fest angeordneten Rinnen |
| Fig. 6 | vertikaler Schnitt der Schwenkrinne |
| Fig. 7 | Schwenkrinne in Draufsicht |
| Fig. 8 | vertikaler Schnitt des Verbindungsgelenkes |
| Fig. 9 | vertikaler Schnitt des Ausgleichsbehälters |
| Fig. 10 | vertikaler Schnitt von Kühlvorrichtung und Speiserrinne |
| Fig. 11 a,b, | vertikaler Schnitt des Behälters |
| Fig. 12 | horizontaler Schnitt des Behälters mit Elektrodenanordnung |
| Fig. 13, 14 | vertikaler Schnitt der Austrittsöffnung mit Blasrohr |
| Fig. 15 | vertikaler Schnitt der Austrittsöffnung mit Kühlrohren |
| Fig. 16 | vertikaler Schnitt des Behälterverschlusses mit Druckzuführung |
| Fig. 17 | vertikaler Schnitt der Austrittsöffnung mit Kühlrohren und Luftzuführung. |

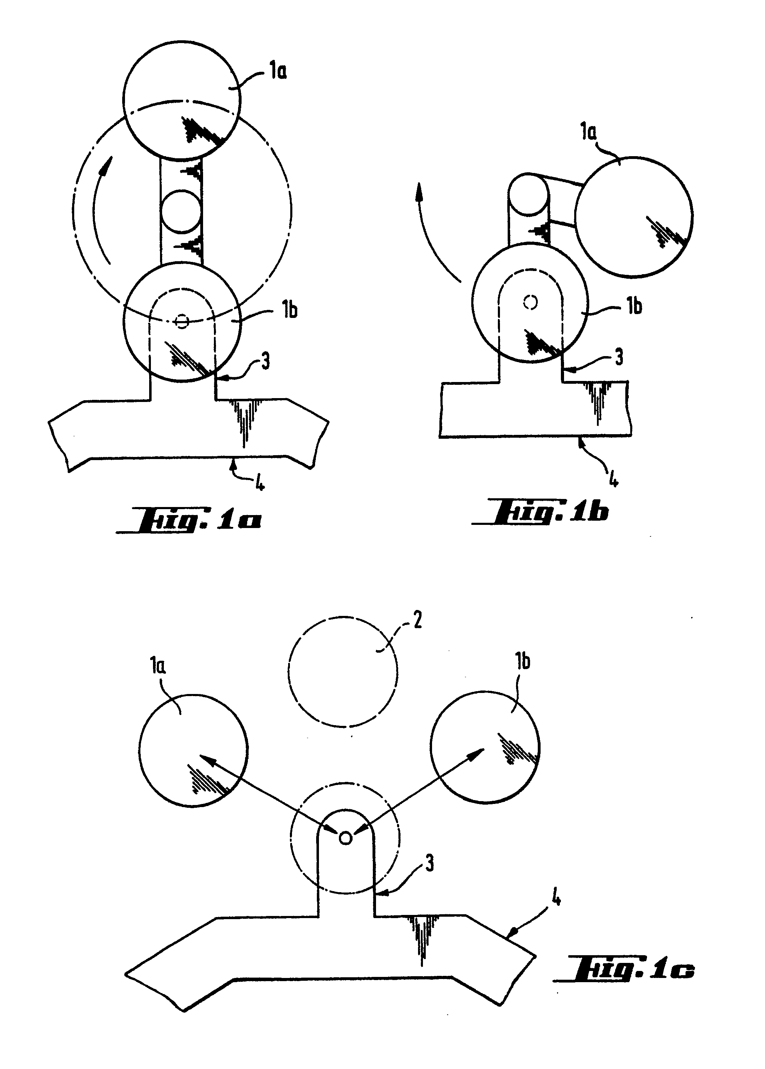

Die Fig. 1 a-c zeigen mögliche Anordnungen von beweglichen Behältern 1a, 1b bei fest angeordneter Rinne 3, die an ein Verteilersystem 4 angeschlossen ist. Die Behälter 1a, 1b können entweder auf einer Kreisbahn bewegt werden, wie es in Fig. 1a und 1b dargestellt ist, oder sie werden abwechselnd vor und zurück bewegt. In Fig. 1c ist ein Ersatzbehälter 2 zwischen den Behältern 1a, 1b angeordnet, der bei Ausfall eines dieser beiden Behälter 1a, 1b eingesetzt werden kann, ohne daß der Betrieb unterbrochen werden muß.

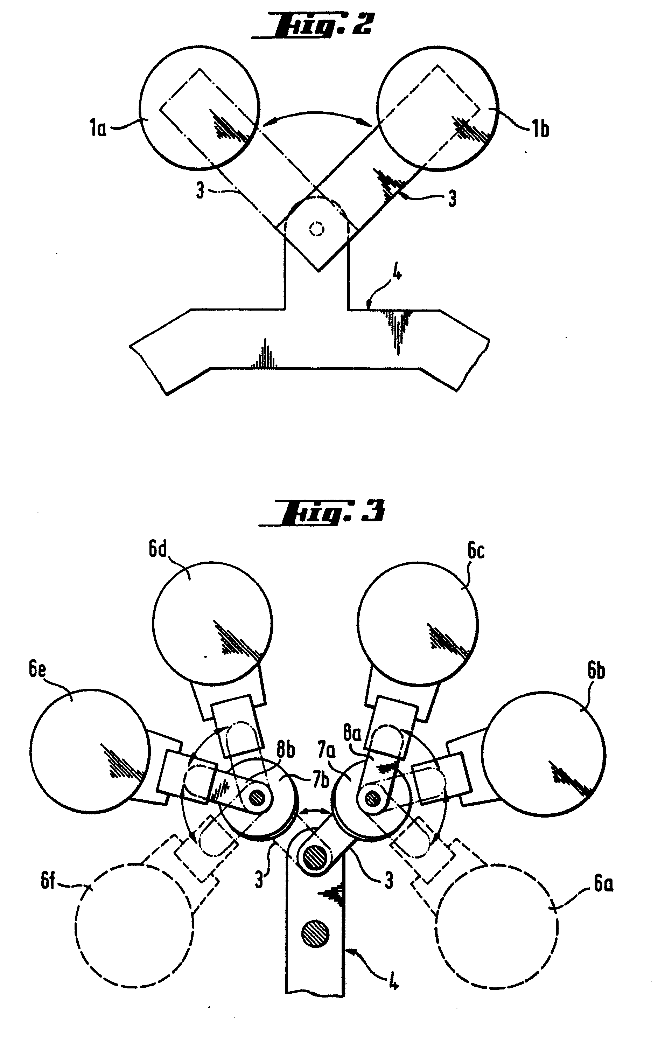

Fig. 2 zeigt eine Anordnung von zwei fest angeordneten Behältern 1a, 1b, wobei die Rinne 3 schwenkbar angebracht ist.

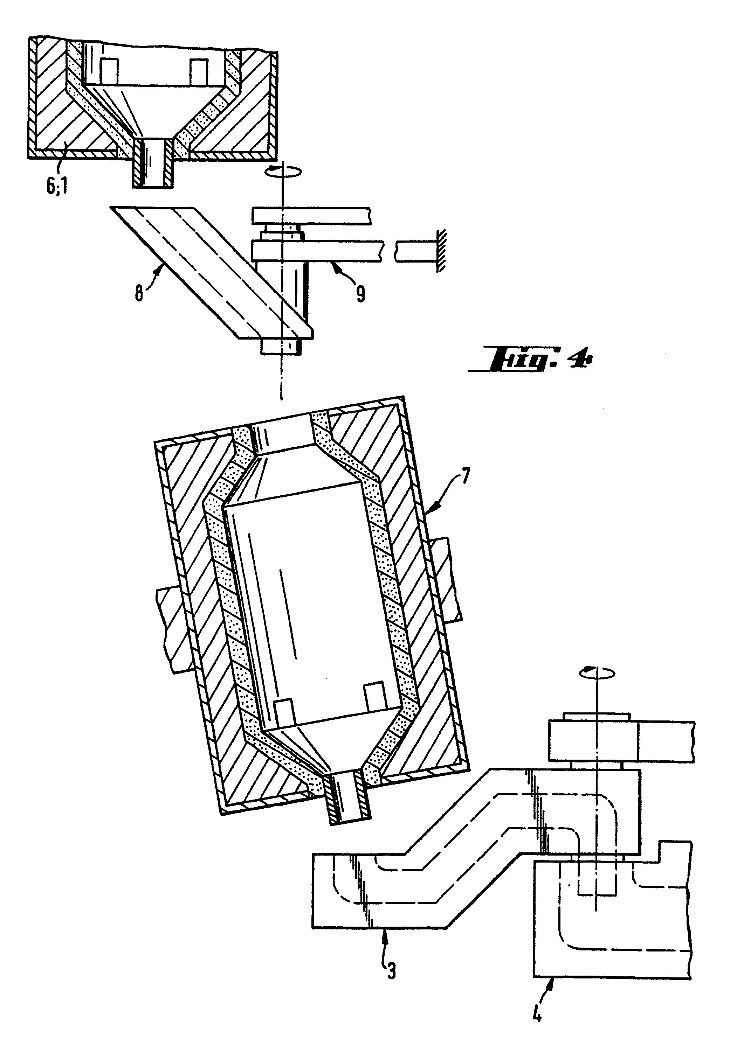

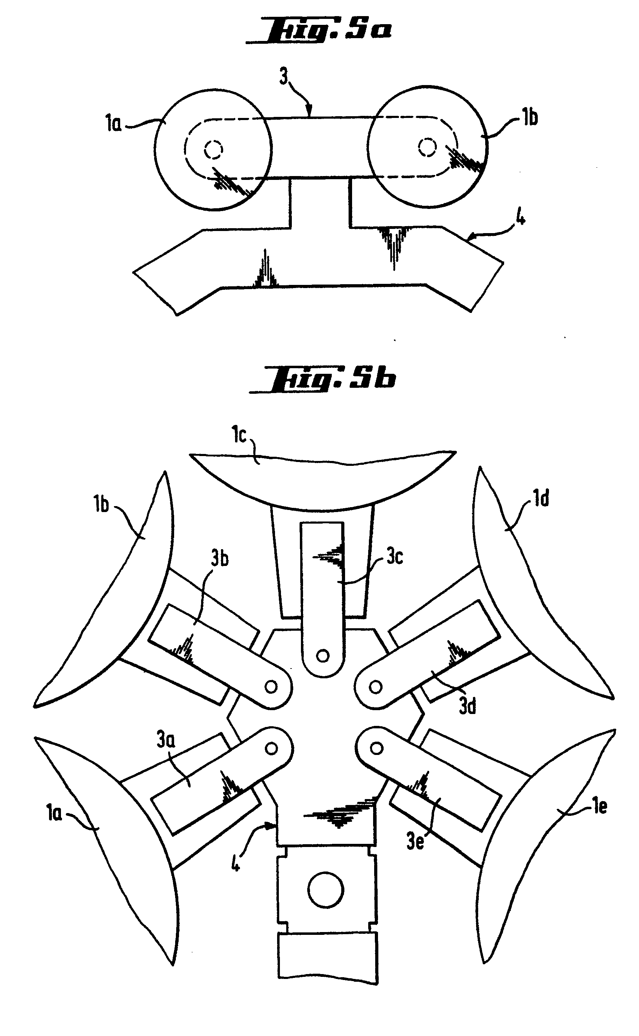

Fig. 3 zeigt eine Anordnung von fest angeordneten Schmelzbehältern 6a, 6b, 6c, 6d, 6e und 6f, getrennten rotierenden Läuterbehältern 7a und 7b und beweglichen Rinnen 8a, 8b und 3 zwischen Schmelz- und Läuterbehälter sowie Läuterbehälter und Verteilerkanal 4. Die Läuterbehälter 7a und 7b werden in drehendem Zustand gefüllt, bis zum Abschluß des Läutern gedreht und im Stillstand entleert. Eine entsprechende Anordnung mit geneigtem Läuterbehälter 7, Schwenkrinne 3 und Verbindungsrinne 8 ist in Fig. 4 dargestellt. Die Verbindungsrinne 8 wird mittels des Schwenkantriebs 9 zu den einzelnen Schmelzbehältern hinbewegt.

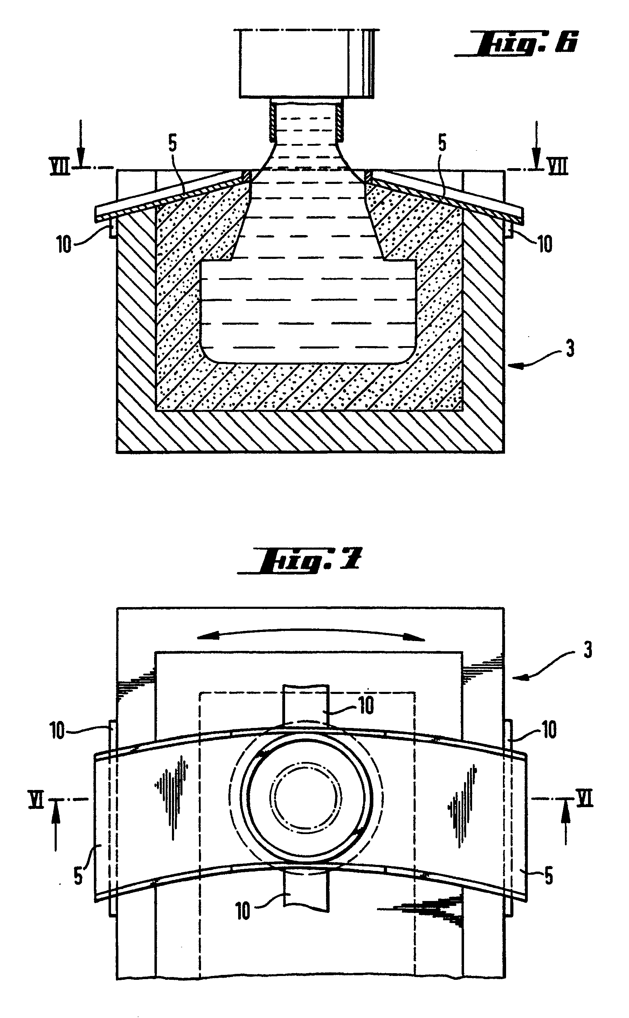

Fig. 5a zeigt eine stationäre Anordnung von zwei Behältern 1a, 1b. In Fig. 5b sind fünf Behälter 1a, 1b, 1c, 1d und 1e über die fest angeordneten Rinnen 3a, 3b, 3c, 3d und 3e mit dem Verteilersystem 4 verbunden.

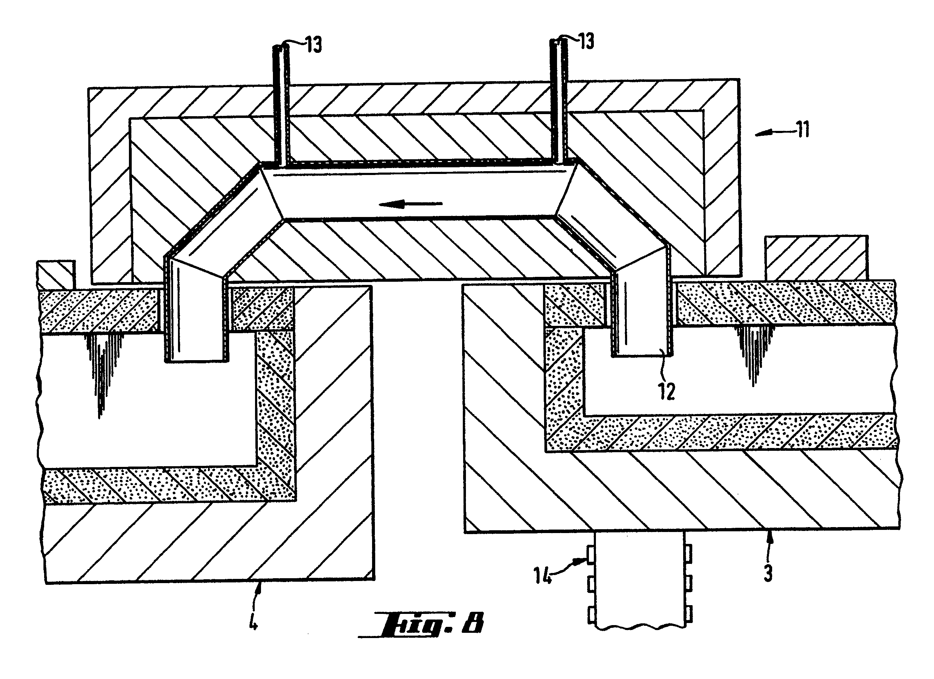

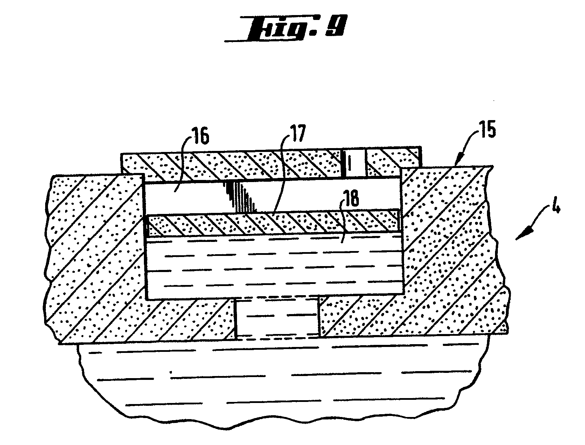

Bei den beweglichen Rinnen 3 muß das beim Aus- und Einschwenken auf die nach unten nicht offenen Teile der Oberseite der Rinne laufende Glas abgeführt werden, damit es bei wiederholtem Vorgang nicht aufwächst. Das geschieht durch Aufheizen der Edelmetallabdeckungen 5 mittels der Heizflansche 10 (Fig. 6 und 7).

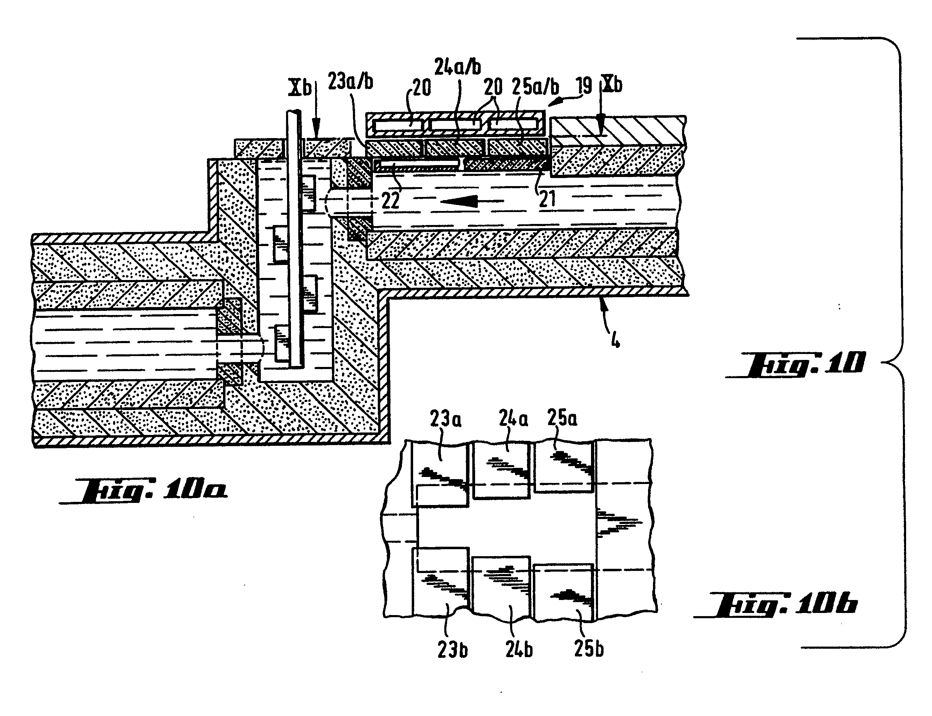

Das Gelenk 11, das die Rinne 3 mit dem Verteilersystem 4 verbindet, ist in Fig. 8 in vertikalem Schnitt dargestellt. Das vorzugsweise aus Edelmetall bestehende Überbrückungsrohr 12 wird bei der Inbetriebnahme über die Zuleitungen 13 so evakuiert, daß es ganz mit Glas gefüllt wird. Die Stromzuführung 14 für die Beheizung der Schwenkrinne 3 erfolgt im Bereich der Drehachse mit bekannten Mitteln.

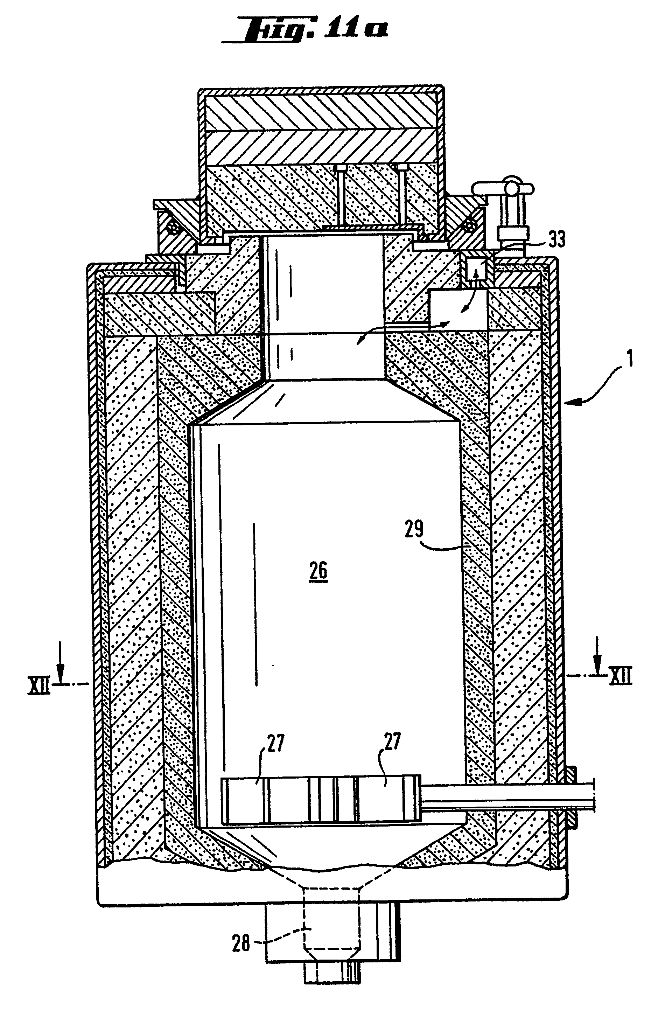

Fig. 9 zeigt den Ausgleichsbehälter 15, der im Verteilersystem 4 angeordnet ist und der während des Wechselns der Behälter bzw. des Schwenkens der Rinne die notwendige Glasmenge zum Konstanthalten des Glasspiegels abgibt. Das Sammeln des Glases geschieht so, daß durch Erzeugen eines Unterdruckes im Raum 16 über der Quarzgutplatte 17 das Glas in den darunterliegenden Raum 18 hineingezogen wird. Beim Abgeben wird der Raum 16 mit Überdruck beaufschlagt und dadurch die Menge gesteuert. Die für die Steuerung erforderlichen Informationen gibt der nicht dargestellte Glasstandsmesser.

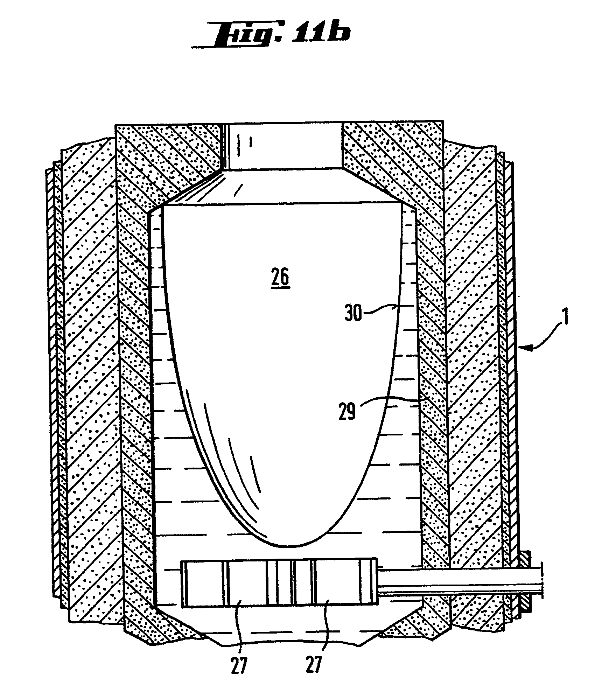

Fig. 10 zeigt eine Vorrichtung 19 für das Abkühlen des Glases auf Verarbeitungstemperatur. Die Glasoberfläche ist entweder durch eine schwimmende Quarzgutplatte 21 oder Edelmetallwanne 22 abgedeckt, damit störende Verdampfungen verhindert werden. Darüber sind Schieber 23a, 23b, 24a, 24b und 25a, 25b sowie Wasserkühler 20 angeordnet.

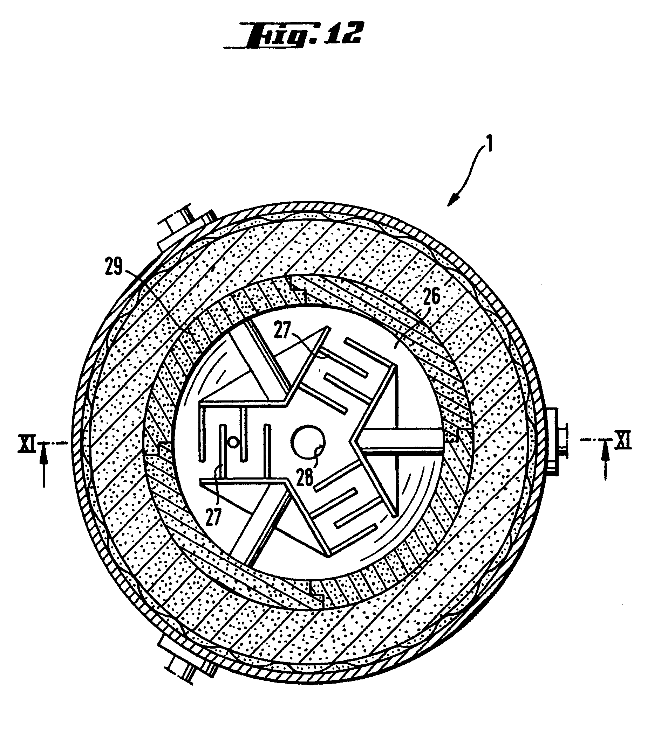

Fig. 11a zeigt einen vertikalen Schnitt durch den erfindungsgemäßen Behälter 1. Am Boden den zylinderförmigen Innenraums sind die Elektroden 27 angeordnet, die gekühlt werden können. Die Lagerung, der Antrieb, das Auswuchten des Behälters und die Übertragung des Heizstroms und der Meßwerte sind technisch gelöst und werden mit bekannten Mitteln durchgeführt. Das Gemenge (Scherbengemisch) wird entweder in den stehenden oder drehenden Behälter eingelegt. Bei drehendem Behälter wird das feuerfeste Material 29 durch eine Glasschicht vor zu schnellem Abkühlen geschützt (Fig. 11b).

Die für das Schmelzen erforderliche Energie wird im Bereich der Elektroden 27 eingebracht, die vorzugsweise plattenförmig ausgebildet sind.

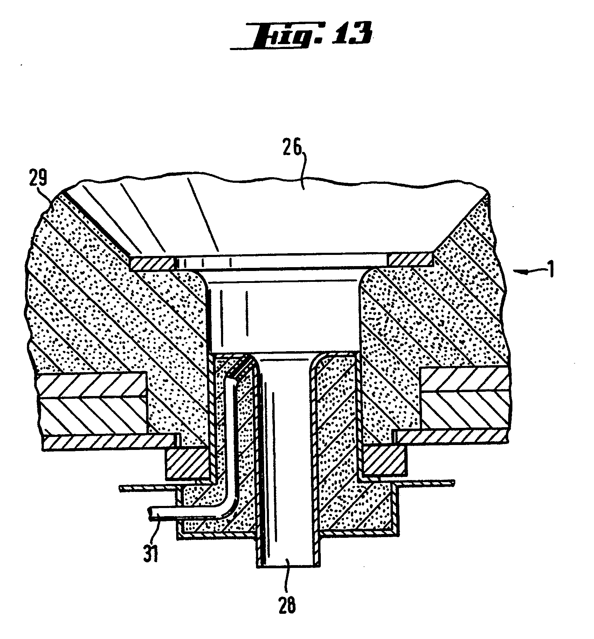

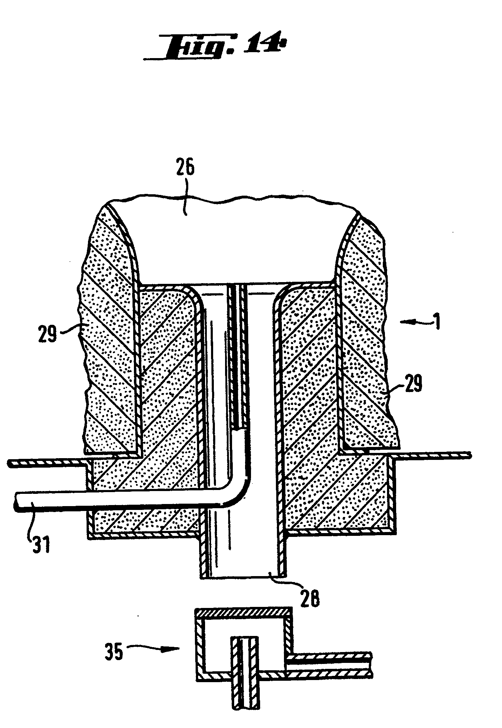

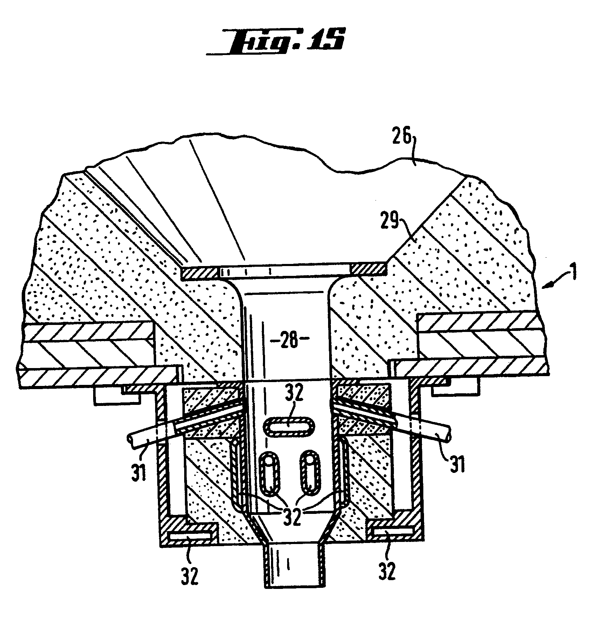

Fig. 12 zeigt einen horizontalen Schnitt durch den Behälter 1 mit einer Anordnungsmöglichkeit dieser Plattenelektroden 27. Die eingebrachte Energie muß über den gesamten Behälterinhalt verteilt werden, damit örtlich keine unzulässig hohen Temperaturen entstehen und der Schmelzvorgang besonders gegen Ende überall gleich schnell abläuft. Wenn bei den vorliegenden Energiedichten, die durch die thermische Strömung begünstigte Konvektion und Strahlung nicht ausreichen, wird der Energietransport durch eine mechanisch verstärkte Strömung im Glasbad verbessert. Das geschieht durch Einblasen eines Inertgases, z.B. Stickstoff Verschiedene Anordnungen des Blasrohres 31 in der Austrittsöffnung 28 des Behälters 1 zeigen die Fig. 13, 14 und 15. Die intensivere Durchmischung verteilt gegebenenfalls vorhandene Schlieren aus dem feuerfesten Material 29 so in der Schmelze, daß diese nicht störend in Erscheinung treten. Das Durchmischen der Schmelze und damit das Beschleunigen des lösens der Gemengeteilchen kann auch durch Änderung der Behälterdrehzahl und der Drehrichtung gefördert werden.

Durch Schleudern der Schmelze wird die Läuterzeit erheblich vermindert. Dies geschieht durch Steigerung des Auftriebs und Verkürzen des Strömungsweges. Beim Schleudern wird nicht oder nur noch sehr wenig geheizt, wodurch nur geringe thermische Strömungen entstehen. Sobald die Beschleunigung der Schmelze beendet ist, wird der Blasenaustrittsweg weitgehend durch die Steigrichtung der Blasen, die sich aus der Resultierenden der Erd- und der Zentrifugalbeschleunigung ergibt, sowie der Behälter- und Paraboloidgeometrie bestimmt.

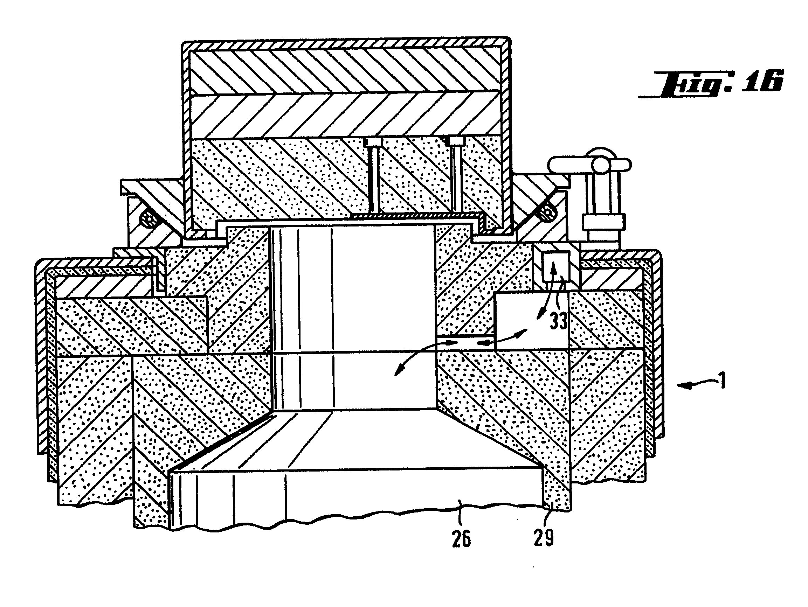

Wenn nötig, kann das Glas im Behälter durch Einblasen von Luft über die Zuführung 33 (s. Fig. 16) in das Paraboloid 30 im Innenraum 26 (s. Fig. 11b) abgekühlt werden. Durch das Schleudern kann mit weniger und in bestimmten Fällen sogar ohne Läutermittel gearbeitet werden. Die Umwelt wird weniger belastet, der Läutergrad des Glases ist durch Verändern der Drehzahl und -zeit schnell und problemlos den jeweiligen Erfordernissen anzupassen.

Es ist auch möglich, mit nicht rotierendem Behälter zu arbeiten, d.h. nur die Vorteile des schnelleren Schmelzens zu nutzen. Dazu wird der Behälter flacher dimensioniert, damit der Austrittsweg der Blasen in vertikaler Richtung klein wird.

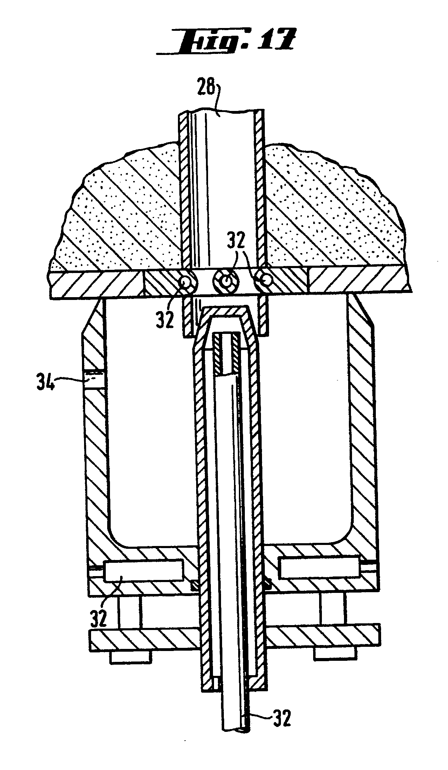

Die Entleerung des Behälters 1 erfolgt durch die im Boden angebrachte Austrittsöffnung 28. Die Glssaustrittsgeschwindigkeit wird durch Anlegen eines Unter- bzw. Überdrucks gesteuert, was zweckmäßigerweise über die Zuführung 33 erfolgt (s. Fig. 16). Zusätzlich kann der Glasaustritt durch einen Gegendruck durch Einblasen von Luft über die Zuführung 34 (s. Fig. 17) im Bereich der Austrittsöffnung 28 gebremst werden.

Durch Unterdruck im Innenraum 26 wird der Glasfluß gebremst, dann mit bekannten Mitteln abgeschnitten und entweder mechanisch durch einen Schieber 35 (Fig. 14) oder durch Einfrieren der Glasschmelze verschlossen. Das Einfrieren erfolgt mittels der in der Austrittsöffnung 28 angeordneten Kühlrohre 32 (s. Fig. 15 und Fig. 17).

## Patentansprüche

1. Verfahren zum chargenweisen Herstellen von Glas durch Schmelzen, Läutern und Entleeren, dadurch gekennzeichnet, daß Schmelzen, Läutern und Entleeren in einem oder mehreren identischen Behälter(n) durchgeführt wird, die elektrisch beheizt werden,
   daß zumindest das Läutern unter Rotation dieses Behälters durchgeführt wird,
   daß das Entleeren des geläuterten Glases bei ruhendem Behälter erfolgt, und
   daß die Zuführung des Glases zu den Weiterverarbeitungsstationen kontinuierlich erfolgt.

2. Verfahren nach Anspruch 1, dadurch gekennzeichnet, daß das Schmelzen und Läutern in einem einzigen Behälter durchgeführt wird.

3. Verfahren nach Anspruch 1, dadurch gekennzeichnet, daß das Schmelzen in einem ersten Behälter und das Läutern in einem zweiten Behälter durchgeführt wird.

4. Verfahren nach Anspruch 3, dadurch gekennzeichnet, daß das Läutern in mindestens zwei Behältern durchgeführt wird und daß jedem Läuterbehälter mindestens zwei Schmelzbehälter vorgeschaltet sind.

5. Verfahren nach Anspruch 4, dadurch gekennzeichnet, daß die Schmelzbehälter und die Läuterbehälter durch bewegliche Rinnen miteinander verbunden sind.

6. Verfahren nach einem der Ansprüche 1 bis 5, dadurch gekennzeichnet, daß die Entleerung der Behälter nach dem Läutern in mindestens eine Rinne erfolgt, die an ein Verteilersystem angeschlossen ist.

7. Verfahren nach Anspruch 6, dadurch gekennzeichnet, daß jedem Behälter eine Rinne stationär zugeordnet ist.

8. Verfahren nach Anspruch 6, dadurch gekennzeichnet, daß die Behälter unbeweglich angeordnet sind und die Rinne beweglich angeordnet ist.

9. Verfahren nach Anspruch 6, dadurch gekennzeichnet, daß die Behälter beweglich angeordnet sind und die Rinne unbeweglich angeordnet ist.

10. Verfahren nach einem der Ansprüche 1 bis 9, dadurch gekennzeichnet, daß beim Entleeren der Behälter die Ausströmgeschwindigkeit des Glases gesteuert wird.

11. Verfahren nach Anspruch 10, dadurch gekennzeichnet, daß die Ausströmgeschwindigkeit des Glases durch Anlegen eines Druckes gesteuert wird.

12. Verfahren nach einem der Ansprüche 1 bis 11, dadurch gekennzeichnet, daß während des Schmelzens in die Glasschmelze Inertgas eingeblasen wird.

13. Verfahren nach Anspruch 6, dadurch gekennzeichnet, daß in diesem Verteilersystem mindestens eine Kühlvorrichtung angeordnet ist.

14. Verfahren nach Anspruch 6, dadurch gekennzeichnet, daß in diesem Verteilersystem mindestens ein Ausgleichsbehälter angeordnet ist.

15. Verfahren nach einem der Ansprüche 1 bis 14, dadurch gekennzeichnet, daß das Entleeren des Glases durch eine Austrittsöffnung erfolgt, die mechanisch verschlossen werden kann.

16. Verfahren nach Anspruch 15, dadurch gekennzeichnet, daß das Entleeren des Glases durch eine Austrittsöffnung erfolgt, die durch Einfrieren der Glasschmelze verschlossen werden kann.

17. Behälter zur Durchführung des Verfahrens gemäß Anspruch 1, bestehend aus einer rotationssymmetrischen Kammer, wobei,
dieser Behälter um eine vertikale Achse rotierbar ist,
dieser Behälter (1) Elektroden zum Beheizen aufweist,

dieser Behälter (1) Mittel zum Verschließen der Austrittsöffnung (28) aufweist,
dieser Behälter (1) Mittel zum Anlegen eines Über- oder Unterdruckes aufweist, und wobei dieser Behälter (1) in der Nähe dieser Austrittsöffnung (28) Blasrohre (31) zum Einblasen eines Inertgases aufweist.

18. Behälter nach Anspruch 17, dadurch gekennzeichnet, daß diese Elektroden (27) am Boden dieses Behälters (1) angeordnet sind.

19. Behälter nach einem der Ansprüche 17 oder 18, dadurch gekennzeichnet, daß diese Elektroden (27) kühlbar sind.

20. Behälter nach einem der Ansprüche 17 bis 19, dadurch gekennzeichnet, daß diese Mittel zum Verschließen dieser Austrittsöffnung (28) aus einem Schieber (35) bestehen.

21. Behälter nach einem der Ansprüche 17 bis 19, dadurch gekennzeichnet, daß diese Mittel zum Verschließen dieser Austrittsöffnung (28) Kühlrohre (32) sind.

22. Behälter nach einem der Ansprüche 17 bis 21, dadurch gekennzeichnet, daß dieser Behälter (1) um eine horizontale Achse drehbar ist.

## Claims

1. Process for batchwise production of glass by melting, refining, and emptying, characterized in that melting, refining and emptying are carried out in one or more identical containers which are electrically heated, in that at least the refining is carried out with rotation of this container, in that the emptying of the refined glass takes place with the container at rest, and in that the supply of glass to the further processing stations takes place continuously.

2. Process according to Claim 1, characterized in that the melting and refining are carried out in a single container.

3. Process according to Claim 1, characterized in that melting is carried out in a first container and refining is carried out in a second container.

4. Process according to Claim 3, characterized in that refining is carried out in at least two containers, and in that at least two melt containers are placed upstream of each refined-mass container.

5. Process according to Claim 4, characterized in that the melt containers and the refined mass containers are connected to one another by mobile channels.

6. Process according to one of Claims 1 to 5, characterized in that the containers are emptied after refining into at least one channel connected to a distribution system.

7. Process according to Claim 6, characterized in that a channel is assigned in stationary manner to each container.

8. Process according to Claim 6, characterized in that the containers are arranged to be immobile and the channel is arranged to be mobile.

9. Process according to Claim 6, characterized in that the containers are arranged to be mobile and the channel is arranged to be immobile.

10. Process according to one of Claims 1 to 9, characterized in that the rate of outward flow of the glass on emptying the containers is controlled.

11. Process according to Claim 10, characterized in that the rate of outward flow of the glass is controlled by applying a pressure.

12. Process according to one of Claims 1 to 11, characterized in that inert gas is blown into the glass melt during melting.

13. Process according to Claim 6, characterized in that at least one cooling apparatus is arranged in this distribution system.

14. Process according to Claim 6, characterized in that at least one equalizing container is arranged in this distribution system.

15. Process according to one of Claims 1 to 14, characterized in that the glass is emptied through an exit opening which may be closed mechanically.

16. Process according to Claim 15, characterized in that the glass is emptied through an exit opening which may be closed by solidifying the glass melt.

17. Container for carrying out the process according to Claim 1, comprising a rotationally symmetrical chamber, wherein the said container is rotatable about a vertical axis, wherein the said container (1) has electrodes (27) for heating, wherein the said container (1) has means for closing the exit opening (28), wherein the said container (1) has means for applying an overpressure or an underpressure, and wherein the said container (1) has in the vicinity of the said exit opening (28) blow tubes (31) for blowing in an inert gas.

18. Container according to Claim 17, characterized in that the said electrodes (27) are arranged on the base of the said container (1).

19. Container according to one of Claims 17 or 18, characterized in that the said electrodes (27) may be cooled.

20. Container according to one of Claims 17 to 19, characterized in that the said means for closing the said exit opening (28) comprise a slider (35).

21. Container according to one of Claims 17 to 19, characterized in that the said means for closing the said exit opening (28) are cooling tubes (32).

22. Container according to one of Claims 17 to 21, characterized in that the said container (1) is rotatable about a horizontal axis.

**Revendications**

1. Procédé de fabrication par enfournements de verre par fusion, affinage et déchargement, caractérisé en ce que la fusion, l'affinage et le déchargement sont réalisés dans une ou plusieurs cuves identiques qui sont chauffées à l'électricité, en ce que l'affinage au moins est réalisé avec rotation de ladite cuve, en ce que le déchargement du verre affiné à lieu avec la cuve à l'arrêt et en ce que l'alimentation en verre des stations de transformation est continue.

2. Procédé selon la revendication 1, caractérisé en ce que la fusion et l'affinage sont réalisés dans une cuve unique.

3. Procédé selon la revendication 1, **caractérisé** en ce que la fusion est réalisée dans une première cuve et l'affinage est réalisé dans une deuxième cuve.

4. Procédé selon la revendication 3, **caractérisé** en ce que l'affinage est réalisé dans au moins deux cuves et ce qu'au moins deux cuves de fusion sont placées en amont de chaque cuve d'affinage.

5. Procédé selon la revendication 4, **caractérisé** en ce que les cuves de fusion et les cuves d'affinage sont reliées entre elles par des goulottes mobiles.

6. Procédé selon l'une des revendications 1 à 5, **caractérisé** en ce que le déchargement des cuves après affinage a lieu dans au moins une goulotte qui est reliée à un système de distribution.

7. Procédé selon la revendication 6, **caractérisé** en ce qu'une goulotte fixe est associée à chaque cuve.

8. Procédé selon la revendication 6, **caractérisé** en ce que les cuves sont fixes et les goulottes sont mobiles.

9. Procédé selon la revendication 6, **caractérisé** en ce que les cuves sont mobiles et les goulottes sont fixes.

10. Procédé selon l'une des revendications 1 à 9, **caractérisé** en ce que la vitesse d'écoulement du verre est contrôlée lors du déchargement des cuves.

11. Procédé selon la revendication 10, **caractérisé** en ce que la vitesse d'écoulement du verre est contrôlée par application d'une pression.

12. Procédé selon l'une des revendications 1 à 11, **caractérisé** en ce qu'un gaz inerte est injecté dans la coulée de verre pendant la fusion.

13. Procédé selon la revendication 6, **caractérisé** en ce qu'au moins un dispositif de refroidissement est agencé dans ledit système de distribution.

14. Procédé selon la revendication 6, **caractérisé** en ce qu'au moins une cuve de compensation est montée dans ledit système de distribution.

15. Procédé selon l'une des revendications 1 à 14, **caractérisé** en ce que le déchargement du verre a lieu par un orifice de sortie qui peut être obturé mécaniquement.

16. Procédé selon la revendication 15, **caractérisé** en ce que le déchargement du verre a lieu par un orifice de sortie qui peut être obturé par solidification de la coulée de verre.

17. Cuve pour la mise en oeuvre du procédé selon la revendication 1, composée d'une chambre symétrique de rotation,

ladite cuve pouvant tourner autour d'un axe vertical,

ladite cuve (1) comportant des électrodes (27) de chauffage,

ladite cuve (1) comportant des moyens d'obturation de l'orifice de sortie (28),

ladite cuve (1) comportant des moyens pour l'application d'une pression supérieure ou inférieure à la pression atmosphérique, et

ladite cuve (1) comportant au voisinage dudit orifice de sortie (28) des cannes de soufflage (31) pour le soufflage d'un gaz inerte.

18. Cuve selon la revendication 17, **caractérisée** en ce que les électrodes (27) sont disposées au fond de ladite cuve (1).

19. Cuve selon l'une des revendications 17 ou 18, **caractérisée** en ce que les électrodes (27) peuvent être refroidies.

20. Cuve selon l'une des revendications 17 à 19, **caractérisée** en ce que les moyens d'obturation de l'orifice de sortie (28) se composent d'un tiroir (35).

21. Cuve selon l'une des revendications 17 à 19, **caractérisée** en ce que les moyens d'obturation de l'orifice de sortie (28) sont des tubes de refroidissement (32).

22. Cuve selon l'une des revendications 17 à 21, **caractérisée** en ce que la cuve (1) peut tourner autour d'un axe horizontal.

**Fig. 1a**

**Fig. 1b**

**Fig. 1c**

**Fig. 2**

**Fig. 3**

Fig. 4

## Fig. 5a

## Fig. 5b

Fig. 6

Fig. 7

Fig. 8

EP 0 163 173 B1

EP 0 163 173 B1

*Fig. 9*

15

Fig. 10

Fig. 10a

Fig. 10b

# *Fig. 11a*

## Fig. 11b

Fig. 12

## Fig. 13

*Fig. 14*

**Fig. 15**

Fig. 16

EP 0 163 173 B1

Fig. 17